# EUROPEAN PATENT APPLICATION

(11) **EP 3 177 091 A1**
(43) Date of publication of application: **07.06.2017**
(21) Application number: 15827426.6
(22) Date of filing: 01.07.2015
(51) Int. Cl.: H04W 72/04, H04W 28/06

(54) **WIRELESS BASE STATION, USER TERMINAL, AND WIRELESS COMMUNICATION METHOD**

(30) Priority: 31.07.2014 JP 2014156895
(71) Applicant: NTT DOCOMO, INC., Chiyoda-ku Tokyo 100-6150 (JP)
(72) Inventor: HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2015/068994
(87) International publication number: WO 2016/017357

(57) **Abstract**

The present invention is designed to control UL communication and DL communication flexibly and improve throughput in radio communication. The present invention provides a receiving section that receives uplink data that is transmitted from a user terminal by using an uplink shared channel (PUSCH), a transmission section that transmits downlink control information and downlink data to the user terminal, and a control section that controls scheduling for the user terminal, and the control section controls the transmission of the downlink data using the uplink shared channel (PUSCH).

## Description

### Technical Field

The present invention relates to a radio base station, a user terminal and a radio communication method that are applicable to next-generation communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

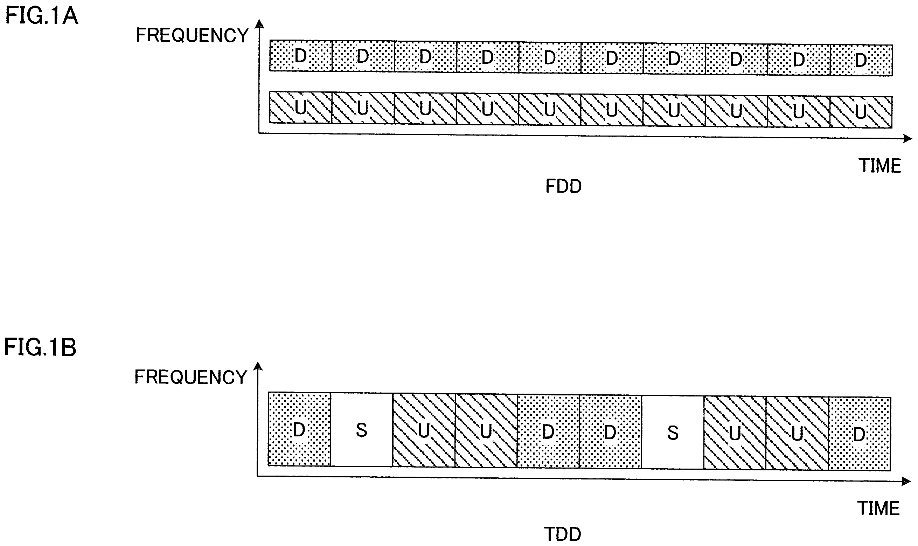

As duplex modes for radio communication in LTE and LTE-A systems, there are frequency division duplex (FDD) to divide between the uplink (UL) and the downlink (DL) based on frequency, and time division duplex (TDD) to divide between the uplink and the downlink based on time (see FIGs. 1A and 1B). In the event of TDD, the same frequency region is used in both uplink and downlink communication, and signals are transmitted and received to and from one transmitting/receiving point by dividing between the uplink and the downlink based on time.

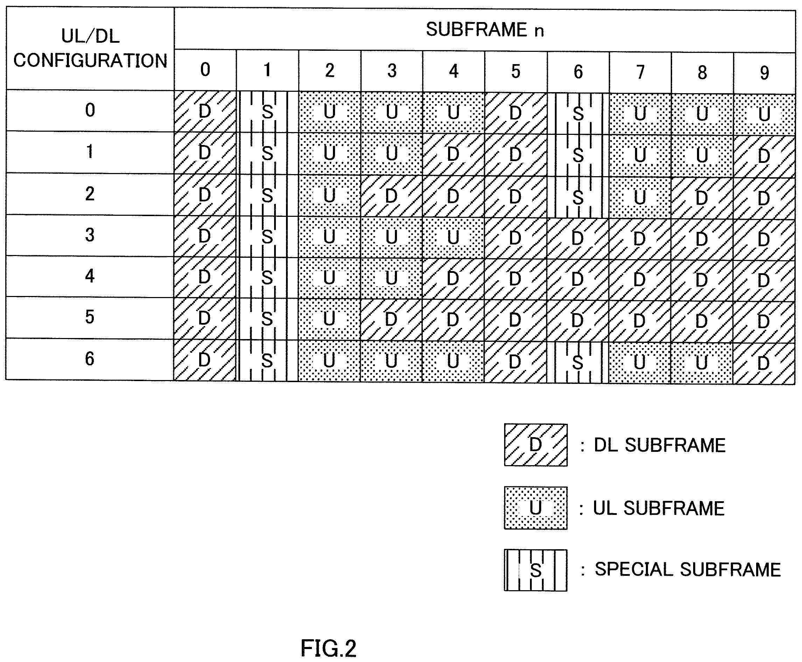

In TDD in LTE systems, a plurality of frame configurations (UL/DL configurations) are stipulated with varying transmission ratios between uplink subframes (UL subframes) and downlink subframes (DL subframes). To be more specific, as shown in FIG. 2, seven frame configurationsnamely, UL/DL configurations 0 to 6 -- are stipulated, where subframes #0 and #5 are allocated to the downlink, and subframe #2 is allocated to the uplink.

Also, the system band of LTE-A systems (Rel. 10/11) includes at least one component carrier (CC), where the system band of LTE systems constitutes one unit. Gathering a plurality of component carriers (cells) to make a wide band is referred to as "carrier aggregation" (CA).

### Citation List

### Non-Patent Literature

Non-Patent Literature 1: 3GPP TS 36. 300 "Evolved UTRA and Evolved UTRAN Overall Description"

### Summary of Invention

### Technical Problem

Generally speaking, in radio communication systems, the volume of DL traffic and the volume of UL traffic are different, and the volume of DL traffic is likely to increase in comparison to the volume of UL traffic. Also, the ratio of DL traffic and UL traffic is not constant, and varies over time or between locations.

However, in existing LTE/LTE-A systems, the effective use (flexibility) of radio resources has limits. For example, in FDD, UL frequency resources cannot be used for DL communication. In TDD, likewise, UL time resources cannot be used for DL communication dynamically.

Consequently, there is a demand for a method of improving throughput in radio communication by flexibly controlling UL communication and DL communication by taking into consideration the volume of traffic and so on.

The present invention has been made in view of the above, and it is therefore an object of the present invention to provide a radio base station, a user terminal and a radio communication method which can control UL communication and DL communication flexibly, and improve throughput in radio communication.

### Solution to Problem

A radio base station according to one aspect of the present invention has a receiving section that receives uplink data that is transmitted from a user terminal by using an uplink shared channel (PUSCH), a transmission section that transmits downlink control information and downlink data to the user terminal, and a control section that controls scheduling for the user terminal, and, in this radio base station, the control section controls the transmission of the downlink data using the uplink shared channel (PUSCH).

### Advantageous Effects of Invention

According to the present invention, it is possible to control UL communication and DL communication flexibly and improve throughput in radio communication.

### Brief Description of Drawings

FIGs. 1 provide diagrams to explain duplex modes in LTE/LTE-A;
FIG. 2 is a diagram to show UL/DL configurations for use in TDD cells of existing systems;
FIGs. 3 provide diagrams to show examples of DL-PUSCH transmission/reception;
FIG. 4 is a diagram to show examples of DL-PUSCH receiving timings;
FIGs. 5 provide diagrams to explain a DL-PUSCH grant to indicate reception of the DL-PUSCH;
FIGs. 6 provide diagrams to show examples of methods of allocating DL-PUSCH grants;
FIGs. 7 provide diagrams to show examples of interference when DL-PUSCH transmission/reception is employed;
FIG. 8 is a schematic diagram to show an example of a radio communication system according to the present embodiment;
FIG. 9 is a diagram to explain an overall structure of a radio base station according to the present embodiment;
FIG. 10 is a diagram to explain a functional structure of a radio base station according to the present embodiment;
FIG. 11 is a diagram to explain an overall structure of a user terminal according to the present embodiment; and
FIG. 12 is a diagram to explain a functional structure of a user terminal according to the present embodiment; and

### Description of Embodiments

As described above, in existing LTE systems, UL frequency resources cannot be used for DL communication in FDD, and UL time resources cannot be used for DL communication dynamically in TDD, making effective use of radio resources difficult.

To solve this problem, a study is in progress to use UL time resources in TDD as DL time resources (eIMTA) by changing the UL/DL configuration in TDD semi-statically, on a per cell basis. For example, a radio base station can secure DL communication resources by selecting a UL/DL configuration having a high DL subframe ratio (for example, UL/DL configurations 4, 5 and others in above FIG. 2) depending on the subject cell's communication environment.

However, when cells that use TDD employ varying UL/DL configurations, an interference control technique is required to reduce inter-UL-DL interference with TDD cells that neighbor geographically or in frequency. Consequently, besides eIMTA, a method to make it possible to control UL communication and DL communication flexibly and improve the throughput of DL communication is in demand.

The present inventors have focused on the fact that D2D (Device to Device) communication provides support for the kind of communication that uses a PUSCH format between user terminals (D2D discovery/communication). That is, user terminals that support D2D communication have a function for receiving signals (SC-FDMA signals) that are transmitted by using UL resources in the same format (PUSCH format) as the PUSCH.

In D2D communication that is currently under study, a user terminal performs D2D discovery to find out other user terminals with which the user terminal can communicate. In D2D discovery, the network semi-statically allocates a periodic uplink resource (PUSCH) to every user terminal as a D2D discovery resource. A user terminal allocates the discovery signal to the D2D discovery resource and transmits the signal. Also, the user terminal can find out other communicable user terminals by receiving the discovery signals transmitted from other user terminals.

In this way, in D2D communication, a study is in progress to allow communication between user terminals by using PUSCH resources. Also, the present inventors have focused on the fact that, when application of carrier aggregation (CA) is supported, predetermined UL resources are not always necessary between radio base stations and user terminals.

So, the present inventors have come up with the idea of allowing radio base stations to perform DL communication in a PUSCH format by using UL resources (for example, the PUSCH). That is, a radio base station allocates and transmits downlink data in an uplink shared channel (PUSCH) that is configured in a TDD cell's UL subframes, and/or in the PUSCH that is configured in the UL frequency in FDD. A user terminal performs receiving processes for the downlink data allocated to the PUSCH. Note that a downlink signal (for example, downlink data) which the radio base station transmits by using the PUSCH is also referred to as a "DL-PUSCH" (or a "DL-PUSCH signal").

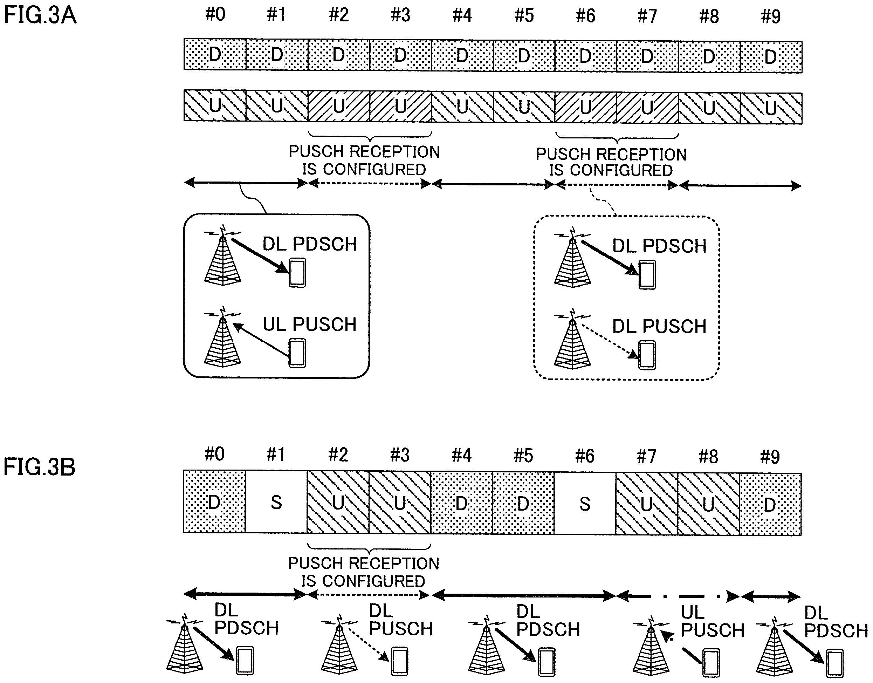

FIGs. 3 show examples of cases where DL communication is carried out using UL resources. FIG. 3A shows a case in which DL communication is carried out using part of the UL resources (here, subframes #2, #3, #6 and #7) in FDD. That is, in part of the UL frequencies in FDD, DL signals (DL-PUSCHs) are transmitted from the radio base station to the user terminal by using the PUSCH. Note that, in the other UL resources, the user terminal transmits UL signals by using the PUSCH in the same way as in existing LTE/LTE-A systems.

FIG. 3B shows a case in which DL communication is carried out using part of the UL resources (here, UL subframes #2 and #3) in TDD. That is, in part of these UL subframes in TDD, DL signals (DL-PUSCHs) are transmitted from the radio base station to the user terminal by using the PUSCH. Note that, in the other subframes (here, UL subframes #7 and #8), the user terminal transmits UL signals by using the PUSCH as in existing LTE/LTE-A systems. Note that, although FIG. 3B shows a TDD UL/DL configuration 1, the present embodiment is by no means limited to this.

Also, the user terminal can be structured to send a report to the network, in advance, to the effect that the user terminal has a capability for receiving DL-PUSCHs (PUSCH receiving capability). This enables the radio base station to transmit DL-PUSCHs to predetermined user terminals selectively. When this PUSCH receiving capability is defined as a user terminal's capability, the radio base station can judge that this user terminal can receive DL-PUSCHs in arbitrary frequency bands upon receiving a report to the effect that the user terminal has this PUSCH receiving capability. On the other hand, this PUSCH receiving capability may be defined as a user terminal's capability in specific frequency bands. In this case, the user terminal reports to the radio base station whether the user terminal has the PUSCH receiving capability, in each frequency band in which the user terminal can communicate. The radio base station can apply configurations so that this user terminal receives DL-PUSCHs in frequency bands where the user terminal has the PUSCH receiving capability.

Also, the radio base station configures the user terminal to receive the PUSCH in UL resources. For example, the radio base station reports information for configuring (enabling/disabling) DL-PUSCH reception in the user terminal, by using higher layer signaling (RRC signaling, broadcast signals and so on), and, furthermore, reports information that is necessary for receiving DL-PUSCHs (for example, information about DL-PUSCH transmission timings, the DCI format to use for scheduling, and so on). Furthermore, the radio base station can dynamically transmit information about DL-PUSCH receiving commands.

The user terminal checks whether or not there is a DL-PUSCH receiving command, and controls the operation depending on whether or not there is a command from the radio base station. Also, the user terminal, after having performed receiving processes (demodulation and so on) of DL-PUSCHs received from the radio base station in UL resources (the UL frequency in FDD, UL subframes in TDD, etc.), can pass the resulting downlink data from the physical layer to a higher layer.

In this way, by transmitting DL signals from the radio base station to the user terminal by using UL resources (PUSCH), it is possible to use UL resources flexibly for DL communication depending on the volume of UL and DL traffic. Also, even when TDD is employed, it is still possible to use radio resources flexibly without changing the mechanism of UL/DL configurations.

Also, the present embodiment makes it possible to use UL resources dynamically for DL communication, in 1-ms units, which are equivalent to the transmission time interval (for example, the subframe). Furthermore, the UL frequencies in FDD and TDD, when used in combination with CA, can be used for DL communication in a flexible and dynamic fashion.

Also, a radio base station that transmits DL-PUSCHs can be seen as being equal to a user terminal that is engaged in UL transmission of the PUSCH by using UL resources, and/or a user terminal that is engaged in D2D communication in a cell that neighbors physically or in frequency. Reference signals (UL DM-RS) that are included in the PUSCH can randomize (or whiten) interference by using different reference signal sequences and/or scrambling codes between cells that neighbor physically or in frequency. Consequently, by using the PUSCH in DL communication where UL resources are used, even when collisions occur with PUSCHs transmitted by other user terminal in cells that are nearby physically or in frequency, it is still possible to achieve an interference randomization (or whitening) effect, and reduce the interference-induced deterioration to a minimum.

Now, the present embodiment will be described below in detail. Note that, with the present embodiment, carrier aggregation (CA) or dual connectivity (DC) can be employed between a cell that performs DL-PUSCH transmission/reception and a cell that does not. For example, CA may be employed by seeing a cell that does not perform DL-PUSCH transmission/reception as a primary cell (PCell) and a cell that performs DL-PUSCH transmission/reception as a secondary cell (SCell).

CA refers to the bundling of a plurality of component carriers (also referred to as "CCs," "carriers," "cells," etc.) into a wide band. Each CC has, for example, a maximum 20 MHz bandwidth, so that, when maximum five CCs are bundled, a wide band of maximum 100 MHz is provided. When CA is employed, one radio base station's scheduler controls the scheduling of a plurality of CCs. Based on this, CA may be referred to as "intra-base station CA" (intra-eNB CA) as well.

Dual connectivity (DC) is the same as CA in bundling a plurality of CCs into a wide band. When DC is employed, a plurality of schedulers are provided individually, and these multiple schedulers each control the scheduling of one or more cells (CCs) managed thereunder. Based on this, DC may be referred to as "inter-base station CA" (inter-eNB CA). Note that, in dual connectivity, carrier aggregation (intra-eNB CA) may be employed per individual scheduler (that is, radio base station) that is provided.

### (First Example)

With a first example, user terminal operations for receiving DL signals (DL-PUSCHs) that are transmitted by using PUSCHs will be described.

A user terminal can be controlled to receive or not to receive the DL-PUSCH based on reports from a radio base station. When a radio base station receives a report to the effect that the user terminal has a DL-PUSCH receiving capability from the user terminal, the radio base station configures (enables/disables) DL-PUSCH receiving operations in the user terminal by using higher layer signaling.

In this case, the radio base station can configure DL-PUSCH receiving operations in the user terminal by using RRC signaling, in cells where DL-PUSCH transmission is carried out. Alternatively, the radio base station can also configure DL-PUSCH receiving operations in a cell that is not a cell to carry out DL-PUSCH transmission and that is another cell where the user terminal is connected (for example, the PCell in the event CA is employed), by using RRC signaling.

Also, the radio base station can also configure (enable/disable) DL-PUSCH receiving operations in the user terminal having a DL-PUSCH receiving capability, by using broadcast signals (for example, SIBs and so on).

The user terminal can apply control to switch between receiving and not receiving DL-PUSCHs based on the configuration (enablement/disablement) of DL-PUSCH receiving operations by the radio base station. When configured (enabled) to carry out DL-PUSCH receiving operations, the user terminal checks whether or not there are DL-PUSCH receiving commands for the subject terminal in UL resources (for example, UL subframes in TDD) where UL transmission is not commanded.

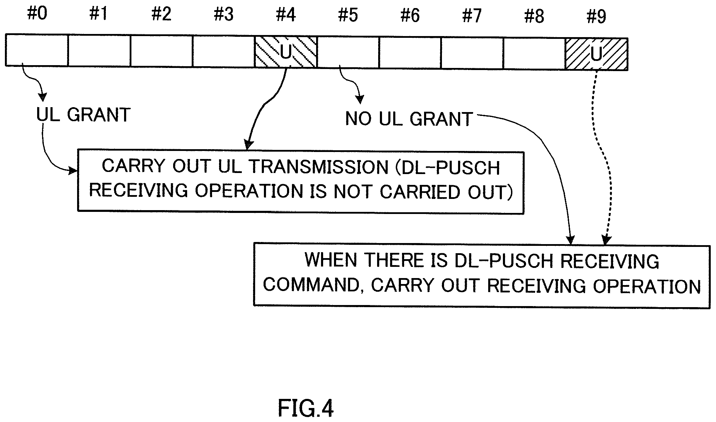

FIG. 4 shows an example of receiving operations in a user terminal that is configured (enabled) to perform DL-PUSCH receiving operations. FIG. 4 shows the DL-PUSCH receiving operations when the user terminal detects a UL grant in subframe #0 and detects no UL grant in subframe #5.

The user terminal detects a UL grant (DCI format 0 or 4) in subframe #0, and therefore carries out UL transmission (PUSCH transmission) based on this UL grant. Here, a case is shown where the user terminal transmits uplink data, in response to the UL grant, in a predetermined subframe (subframe #4), via the PUSCH. In this case, in predetermined subframes where UL transmission takes place, the user terminal does not perform DL-PUSCH receiving operations on the assumption that no DL-PUSCH for the subject terminal is transmitted.

Meanwhile, the user terminal, detecting no UL grant in subframe #5, does not carry out UL transmission in a predetermined subframe (subframe #9). In this case, the user terminal is controlled to perform DL-PUSCH receiving operations in subframe where UL transmission does not take place.

In this way, the user terminal can control the DL-PUSCH signal receiving operations depending on whether or not there is a UL grant to indicate uplink data transmission. By this means, it is possible to prevent UL transmission to use the PUSCH (uplink data transmission) and DL reception to use the PUSCH (downlink data reception) from taking place at the same time. Note that, although FIG. 4 show a case where UL transmission is carried out based on a UL grant at a predetermined timing (four subframes after the subframe in which the UL grant is received), the present embodiment is by no means limited to this.

### (Second Example)

The method of indicating DL-PUSCH reception to a user terminal will be described with a second example. Note that the method which will be described below can be applied to FDD and TDD.

A radio base station can report a DL-PUSCH receiving command (DL-PUSCH grant) to a user terminal, and control the DL-PUSCH receiving operations in the user terminal.

For example, the radio base station reports a DL-PUSCH grant to the user terminal by using a downlink control channel that is configured in DL resources (the PDCCH and/or the EPDCCH) (indicating method 1). To be more specific, the radio base station can indicate reception of the DL-PUSCH by using a UL grant, which is included in downlink control information (for example, DCI format 0 or 4) of existing systems. Alternatively, the radio base station can also transmit a DL-PUSCH grant by using a DL assignment included in downlink control information of existing systems, or by using a new downlink control information format.

When indicating DL-PUSCH receiving operations in the user terminal by using a DL-PUSCH grant, the timing to transmit the DL-PUSCH grant and the timing of DL-PUSCH receiving operations in the user terminal can be configured as appropriate.

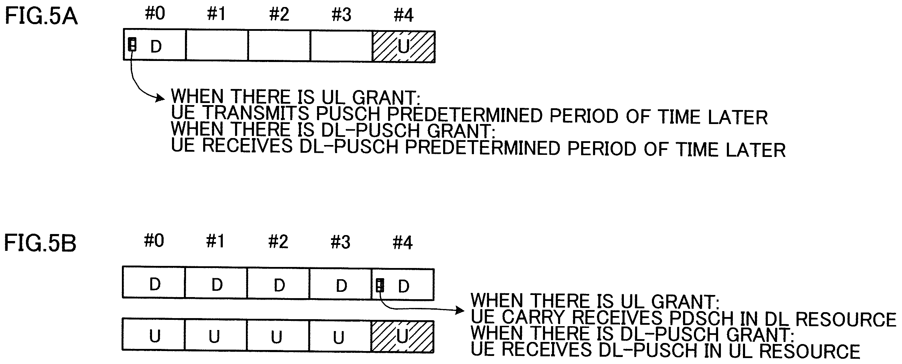

For example, as shown in FIG. 5A, these timings can be configured in the same way as the timings of a UL grant and UL transmission (UL PUSCH) based on this UL grant, in an existing system (indicating method 1-1). FIG. 5A shows a case where a UL grant or a DL-PUSCH grant is configured in subframe #0 and where the user terminal is controlled to transmit the UL-PUSCH signal or receive the DL-PUSCH signal, depending on the grant's content.

When a UL grant is allocated to subframe #0, the user terminal transmits a UL signal (UL-PUSCH) in a subframe that comes a predetermined period (for example, 4 ms) later, based on the UL grant. On the other hand, when a DL-PUSCH grant is allocated to subframe #0, the user terminal receives a DL signal (DL-PUSCH) in a subframe that comes a predetermined period (for example, 4 ms) later, based on the DL-PUSCH grant.

Note that a UL grant to indicate uplink data (UL-PUSCH) and a DL-PUSCH grant to indicate downlink data (DL-PUSCH) can be provided in one grant. In this case, the user terminal can learn the contents of the grants based on other pieces of information (for example, subframes and so on).

In another example of the method of indicating a DL-PUSCH grant, as shown in FIG. 5B, the radio base station may transmit a DL-PUSCH grant in a timing (the same subframe) to carry out DL-PUSCH transmission (indicating method 1-2). FIG. 5B shows a case where the radio base station transmits a DL-PUSCH signal in subframe #4, and where a DL-PUSCH grant is transmitted in this subframe #4.

In this case, if the downlink control information of subframe #4 includes a DL assignment for the user terminal, the user terminal receives a DL signal (PDSCH signal) in a DL resource (PDSCH). Also, if a DL-PUSCH grant for the user terminal is included in the downlink control information, the user terminal receives a DL signal (DL-PUSCH signal) in a UL resource (PUSCH).

Note that, although FIG. 5A shows a case to employ TDD, it is equally possible to employ the same DL-PUSCH receiving operation timing in FDD as well. FIG. 5B is suitable for use in FDD.

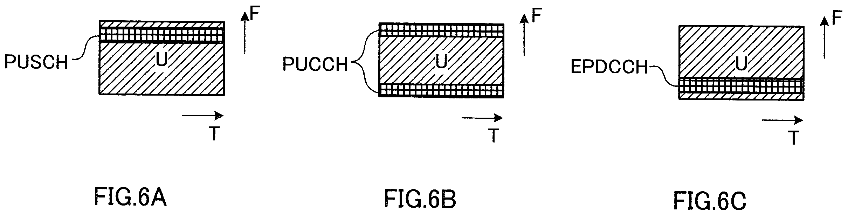

Alternatively, the radio base station can also report a DL-PUSCH grant to the user terminal by using a predetermined region in UL resources (indicating method 2). For example, the radio base station can transmit a DL-PUSCH grant by using (1) the same PUSCH format as that of the D2D SA(Scheduling Assignment) (see FIG. 6A), (2) a PUCCH format (see FIG. 6B), or (3) an enhanced control channel (EPDCCH) format (see FIG. 6C).

When a DL-PUSCH grant is transmitted by using a UL resource (above (1), (2) and (3)), the user terminal receives a DL-PUSCH signal based on the DL-PUSCH grant. In this case, the user terminal receives both the DL-PUSCH grant and the DL-PUSCH in UL resources (PUSCH format).

In this way, by transmitting a DL-PUSCH grant by using a UL resource, it is possible to identify a new DL-PUSCH grant, without changing the existing DL grant (DL assignment) and UL grant.

### (Third Example)

The DL-PUSCH grant to report to the user terminal will be described in detail with a third example. Here, a case will be assumed in which a DL-PUSCH grant is transmitted by using a downlink control channel (the PDCCH and/or the EPDCCH) that is allocated in a DL resource.

When a grant that is common with another grant (for example, a UL grant and/or a DL assignment in existing systems) is used as a DL-PUSCH grant, the user terminal needs to learn the content of this grant. For example, in the event of indicating method 1-1 (FIG. 5A) in the above-described second example, the user terminal needs to identify whether a grant that is included in downlink control information is (1) a grant to indicate DL-PDSCH reception in the subframe in which the UL grant is received, (2) a grant to indicate UL-PUSCH transmission a predetermined timing later, or (3) a grant to indicate DL-PUSCH reception a predetermined timing later.

Also, in the event of indicating methods 1-2 in the above-described second example (FIG. 5B), the user terminal needs to identify whether a grant that is included in downlink control information is (1) a grant to indicate DL-PDSCH reception in the subframe in which the UL grant is received, or (2) a grant to indicate DL-PUSCH reception in the subframe in which the UL grant is received.

Note that, when a DL-PUSCH grant is reported to the user terminal by using a predetermined region in UL resources (indicating method 2), the user terminal can judge that the grant that is received is a DL-PUSCH receiving command, and operate accordingly.

That is, by employing a structure in which the user terminal can identify between the contents of grants from the radio base station, it is possible to report a DL-PUSCH receiving command to the user terminal by using an existing downlink control channel format (DCI format).

With the present embodiment, as a method of identifying a DL-PUSCH grant, for example, the mode of use of each UL subframe is reported to the user terminal as cell-specific information. That is, whether UL subframes are used in DL-PUSCH reception or in UL transmission can be controlled in a cell-specific fashion, and reported to the user terminal.

For example, information about the mode of use of UL subframes (DL-PUSCH reception or UL transmission) is reported to the user terminal, in every subframe in which downlink control information (grant) is transmitted. As an example, a report to the effect that DL-PUSCH reception is to be performed is sent to the user terminal in one-bit information, in every subframe that transmits a grant.

When this one-bit information is not detected by blind decoding, the user terminal operates by using UL subframes for UL transmission. Note that the one-bit information can be allocated to the common search space.

Alternatively, it is possible to link and configure modes of use of UL subframes with indices and report these indices to the user terminal in a predetermined cycle by using higher layer signaling (for example, RRC signaling and so on).

For example, to provide modes of use of UL subframes, it is possible to represent the DL-PUSCH receiving operation with "D" and the UL transmission operation with "U," and configure a plurality of orders of arrangement of "Ds" and "Us" (for example, DDUUDDUUDD) in a predetermined period (for example, in 10-ms units). Each order of arrangement is linked with an index and reported to the user terminal in advance, and these indices are reported to the user terminal in a predetermined cycle (for example, every 10 ms). The user terminal can learn in which UL subframes DL-PUSCH reception takes place, based on the index that is reported. Note that the three-bit index "serving cell reconfiguration index" for reporting TDD DL/UL configurations in eIMTA can be used to report the indices.

In this way, by reporting information about the mode of use of each UL subframe (whether the subframe is used in DL-PUSCH reception or in UL transmission) to the user terminal as cell-specific shared control information, it is possible to use a DL-PUSCH grant and another grant in common.

### (Fourth Example)

The method of transmitting DL-PUSCHs in the radio base station will be described in detail with a fourth example.

First, the transmission power that is used when the radio base station transmits the DL-PUSCH will be described. For the power upon transmitting the DL-PUSCH, it is possible to carry out transmission by using the user terminal's maximum transmission power (for example, 23 dBm) (power control method 1). By this means, the radio base station communicates by using the same transmission power as that of a terminal performing D2D communication by using a PUSCH format, so that it is possible to reduce the interference against other user terminals, neighboring cells and so on.

Also, the radio base station can control the transmission power of the DL-PUSCH in accordance with signaling from other cells (for example, neighboring cells) (power control method 2). As for the signaling from other cells, information (HII) about the RBs where cell edge user terminals are scheduled and/or information (OI) about the RBs suffering interference that is equal to or greater than a predetermined threshold may be used. By this means, the radio base station can control the transmission power of the DL-PUSCH by taking into account other cells, so that it is possible to reduce interference against other cells.

Also, the radio base station can control the transmission power of the DL-PUSCH in accordance with measurement results in the radio base station or the user terminal (power control method 3).

When the DL-PUSCH is transmitted and received, the received quality of the UL resources used to transmit and receive the DL-PUSCH varies significantly depending on the type of transmission (UL/DL transmission) that takes place in nearby cells. For example, a case will be assumed here in which a cell that neighbors the radio base station to transmit the DL-PUSCH carries out UL transmission.

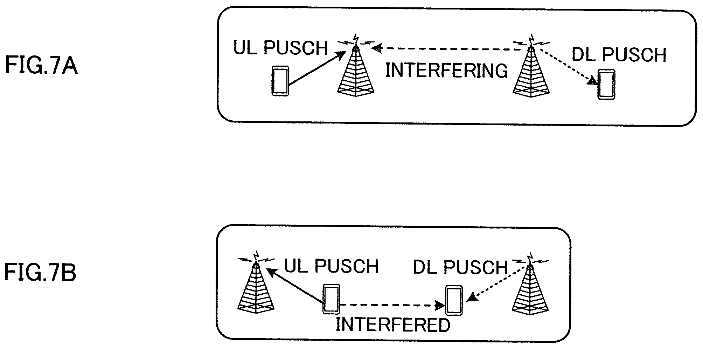

In this case, the transmission of the DL-PUSCH becomes interference (source of interference) against the UL transmission (UL-PUSCH) by the user terminal in the neighboring cell (see FIG. 7A). Also, the UL transmission (UL-PUSCH) which the user terminals in the neighboring cell carries out becomes interference (source of interference) against the DL-PUSCH which the user terminal in the serving cell receive (see FIG. 7B). That is, the user terminal to receive the DL-PUSCH suffers interference from the UL-PUSCH (uplink data) in the same uplink resources.

So, it is preferable if the radio base station and/or the user terminal measure the received quality of UL resources and learn the situation of interference. For example, the radio base station and/or the user terminal can transmit reference signals for measuring the quality of resources (UL resources) used for DL-PUSCH transmission/reception.

For example, the radio base station can use the last symbol in subframes for the channel quality measurement reference signal (SRS: Sounding Reference Signal) in UL resources. In this case, the radio base station can transmit the SRS in subframes to transmit the DL-PUSCH.

Also, the radio base station may configure the measurement and/or reporting of the DL-PUSCH resource quality measurement reference signal (for example, the SRS) in the user terminal. The user terminal can estimate channels based on the SRS transmitted from the radio base station, and perform the DL-PUSCH receiving process.

Also, the radio base station can allocate other signals by taking into account the allocation of the SRS (rate matching). Note that the channel quality measurement reference signal to be transmitted from the radio base station is not limited to the SRS.

### (Structure of Radio Communication System)

Now, the structure of a radio communication system according to an embodiment of the present invention will be described below. In this radio communication system, one of the above-described first example to the fourth example, or a combination of these, can be used.

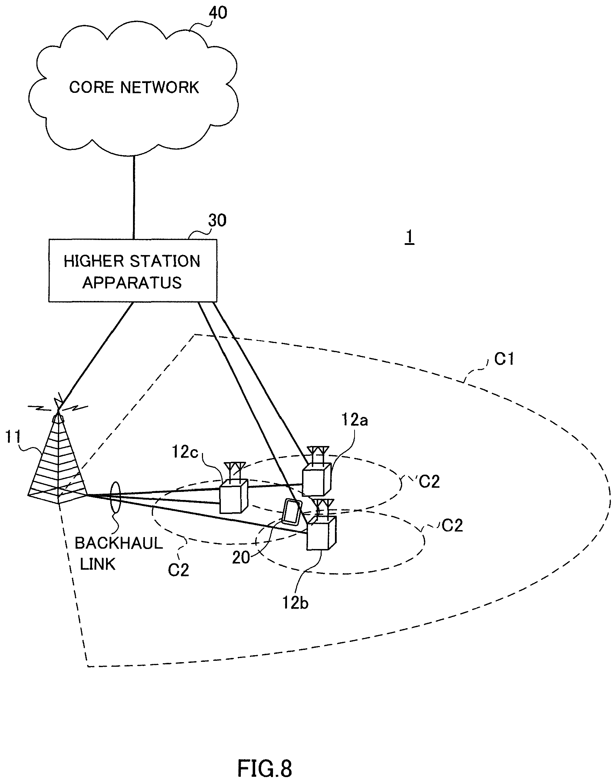

FIG. 8 is a schematic structure diagram to show an example of a radio communication system according to one embodiment of the present invention. As shown in FIG. 8, a radio communication system 1 is comprised of a plurality of radio base stations 10 (11 and 12), and a plurality of user terminals 20 that are present within cells formed by each radio base station 10 and that are configured to be capable of communicating with each radio base station 10. The radio base stations 10 are each connected with a higher station apparatus 30, and are connected to a core network 40 via the higher station apparatus 30.

In FIG. 8, the radio base station 11 is, for example, a macro base station that has a relatively wide coverage, and forms a macro cell C1. The radio base stations 12 are, for example, small base stations having local coverages, and form small cells C2. Note that the number of radio base stations 11 and 12 is not limited to that shown in FIG. 8.

The macro cell C1 and the small cells C2 may use the same frequency band or may use different frequency bands. Also, the radio base stations 11 and 12 are connected with each other via an inter-base station interface (for example, optical fiber, the X2 interface, etc.).

Note that the macro base station 11 may be referred to as an "eNodeB" (eNB), a "radio base station," a "transmission point," and so on. The small base stations 12 are radio base stations having local coverages, and may be referred to as "RRHs" (Remote Radio Heads), "pico base stations," "femto base stations," "HeNBs" (Home eNodeBs), "transmission points," "eNodeBs" (eNBs) and so on.

The user terminals 20 are terminals to support various communication schemes such as LTE, LTE-A and so on, and may include both mobile communication terminals and stationary communication terminals. The user terminals 20 can communicate with other user terminals 20 via the radio base stations 10.

The higher station apparatus 30 may be, for example, an access gateway apparatus, a radio network controller (RNC), a mobility management entity (MME) and so on, but is by no means limited to these.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, synchronization signals, MIBs (Master Information Blocks) and so on are communicated by the PBCH.

The L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is transmitted by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, according to the present embodiment, DL communication (DL-PUSCH) is carried out using the PUSCH configured in predetermined UL resources (UL subframes, the UL frequency band, etc.).

Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated. Also, a channel quality measurement reference signal (SRS: Sounding Reference Signal) and demodulation reference signals (DM-RSs) for demodulating the PUCCH and the PUSCH are transmitted as uplink reference signals.

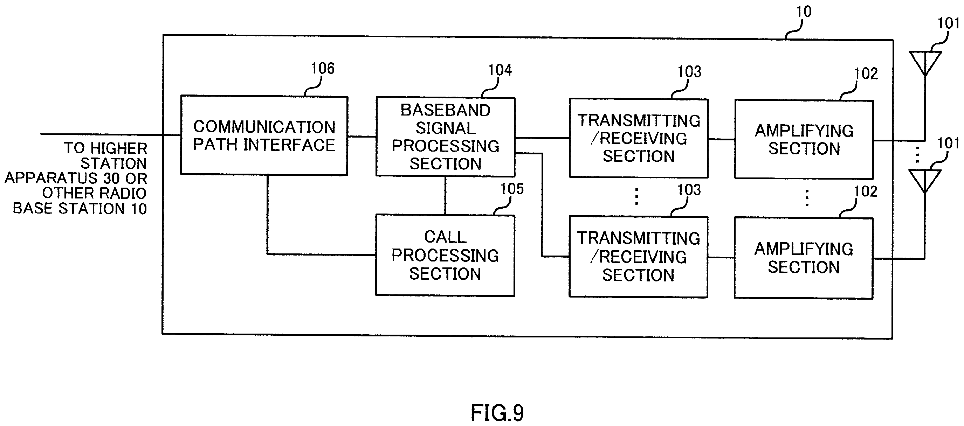

FIG. 9 is a diagram to show an overall structure of a radio base station 10 according to the present embodiment. The radio base station 10 (which may be either a radio base station 11 or 12) has a plurality of transmitting/receiving antennas 101 for MIMO communication, amplifying sections 102, transmitting/receiving sections 103, a baseband signal processing section 104, a call processing section 105 and a communication path interface 106. Note that the transmitting/receiving sections 103 are comprised of transmission sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts the downlink signals, pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

The transmitting/receiving sections 103 (transmission sections) can transmit information for configuring (enabling/disabling) reception of downlink data (DL-PUSCH) using the uplink shared channel (PUSCH), in the user terminal, through higher layer signaling (RRC signaling, broadcast signals and so on). Also, the transmitting/receiving sections 103 can report information about the subframes to transmit and receive the DL-PUSCH and so on, to the user terminal. Note that, for the transmitting/receiving sections 103, transmitters/receivers, transmitting/receiving circuits or transmitting/receiving devices that are used in the technical field to which the present invention pertains can be used.

On the other hand, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 transmits and receives signals to and from neighboring radio base stations 10 (backhaul signaling) via an inter-base station interface (for example, optical fiber, the X2 interface, etc.).

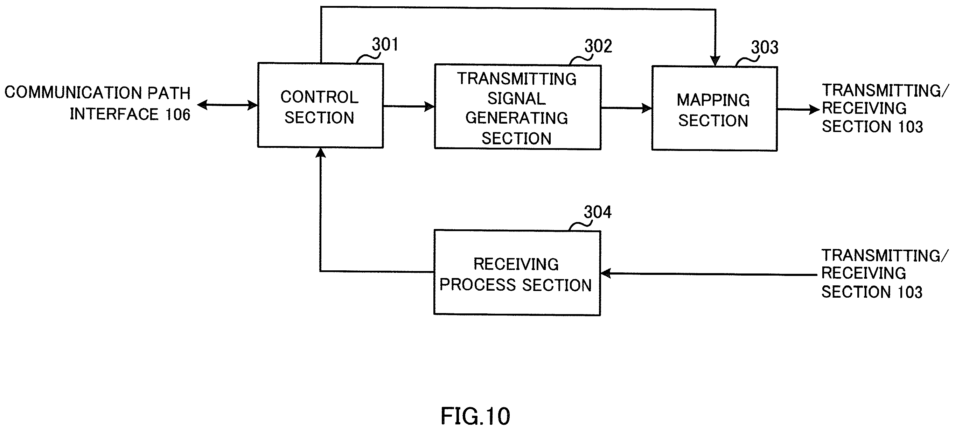

FIG. 10 is a diagram to show a principle functional structure of the baseband signal processing section 104 provided in the radio base station 10 according to the present embodiment. Note that, although FIG. 10 primarily shows functional blocks that pertain to characteristic parts of the present embodiment, the radio base station 10 has other functional blocks that are necessary for radio communication as well.

As shown in FIG. 10, the baseband signal processing section 104 provided in the radio base station 10 has a control section (scheduler) 301, a transmission signal generating section 302, a mapping section 303 and a receiving process section 304.

The control section (scheduler) 301 controls the scheduling (transmission from the radio base station 10) of downlink data signals that are transmitted in the PDSCH and downlink control signals that are communicated in the PDCCH and/or the enhanced PDCCH (EPDCCH). Also, the control section 301 controls the scheduling of downlink data signals that are transmitted in the PUSCH (DL-PUSCH).

Also, the control section 301 controls the scheduling of downlink reference signals such as system information, synchronization signals, the CRS, the CSI-RS and so on. Also, the control section 301 also controls the scheduling (transmission from the user terminal 20) of uplink reference signals, uplink data signals that are transmitted in the PUSCH, and uplink control signals that are transmitted in the PUCCH and/or the PUSCH. Note that the control section 301 can be constituted with a controller, a control circuit or a control device that is used in the technical field to which the present invention pertains.

Also, the control section 301 can indicate the user terminal to receive the DL-PUSCH by using a downlink control channel (the PDCCH and/or the EPDCCH). For example, the control section 301 transmits the DL-PUSCH in subframes in which uplink data transmission is not indicated with a UL grant. Also, the control section 301 applies control so that the DL-PUSCH is transmitted in the same subframes as subframes in which a DL-PUSCH grant is indicated, or in subframes which come a predetermined period of time later.

Also, the control section 301 may configure and use a grant (for example, a UL grant in existing systems) to indicate uplink data transmission using the PUSCH and a grant to indicate reception of the DL-PUSCH in common, as one grant.

The transmission signal generating section 302 generates DL signals (downlink control signals, downlink data signals, downlink reference signals and so on) based on commands from the control section 301, and outputs these signals to the mapping section 303. For example, the transmission signal generating section 302 generates DL assignments, which report downlink signal allocation information, and UL grants, which report uplink signal allocation information, based on commands from the control section 301. Furthermore, the downlink data signal is subjected to a coding process and a modulation process, based on coding rates and modulation schemes that are determined based on CSI from each user terminal 20 and so on.

Also, the transmission signal generating section 302 generates downlink data in a PUSCH format, in predetermined UL subframes. The downlink data (DL-PUSCH) that is generated in a PUSCH format is mapped to uplink resources (PUSCH) in the mapping section 303. Note that he transmission signal generating section 302 can be constituted with a signal generator or a signal generating circuit that is used in the technical field to which the present invention pertains.

The mapping section 303 maps the downlink signals generated in the transmission signal generating section 302 to radio resources based on commands from the control section 301, and outputs these to the transmitting/receiving sections 103. The mapping section 303 maps the downlink data to the PDSCH or the PUSCH based on commands from the control section 301. Note that the mapping section 303 can be constituted with a mapping circuit or a mapper that is used in the technical field to which the present invention pertains.

The receiving process section 304 performs receiving processes (for example, demapping, demodulation, decoding and so on) of UL signals (uplink control signals, uplink data signals, uplink reference signals and so on) transmitted from the user terminal 20. Also, the receiving process section 304 may measure the received power (RSRP), channel states and so on by using the received signals (for example, the SRS). Note that the processing results and the measurement results may be output to the control section 301. The receiving process section 304 can be constituted with a signal processor or a signal processing circuit that is used in the technical field to which the present invention pertains.

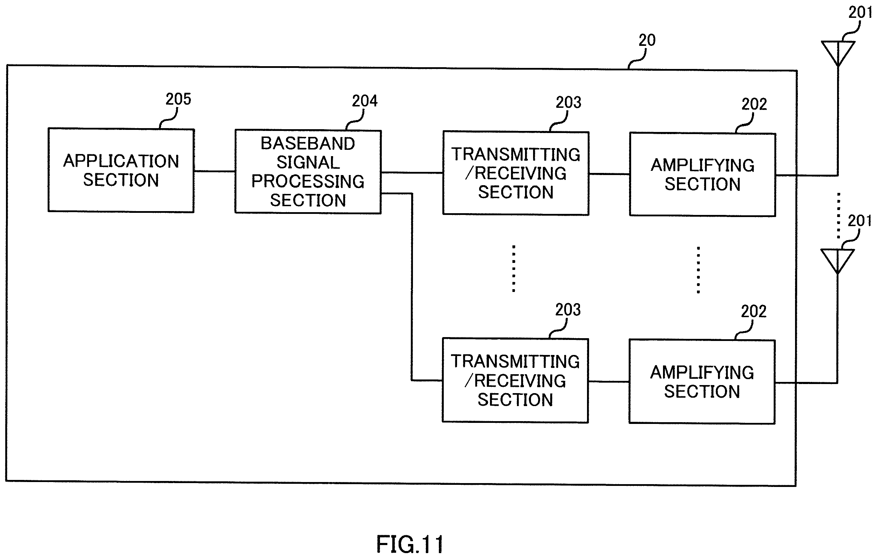

FIG. 11 is a diagram to show an overall structure of a user terminal 20 according to the present embodiment. As shown in FIG. 11, the user terminal 20 has a plurality of transmitting/receiving antennas 201 for MIMO communication, amplifying sections 202, transmitting/receiving sections 203, a baseband signal processing section 204 and an application section 205. Note that transmitting/receiving sections 203 may be comprised of transmission sections and receiving sections.

Radio frequency signals that are received in a plurality of transmitting/receiving antennas 201 are each amplified in the amplifying sections 202. Each transmitting/receiving section 203 receives the downlink signals amplified in the amplifying section 202. The received signals are subjected to frequency conversion and converted into the baseband signal in the transmitting/receiving sections 203, and output to the baseband signal processing section 204.

The transmitting/receiving sections 203 (receiving sections) receive DL-PUSCHs based on information for configuring (enabling/disabling) DL-PUSCH reception. Note that the transmitting/receiving sections 203 can be constituted with transmitters/receivers, transmitting/receiving circuits or transmitting/receiving devices that are used in the technical field to which the present invention pertains.

In the baseband signal processing section 204, the baseband signals that are input are subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

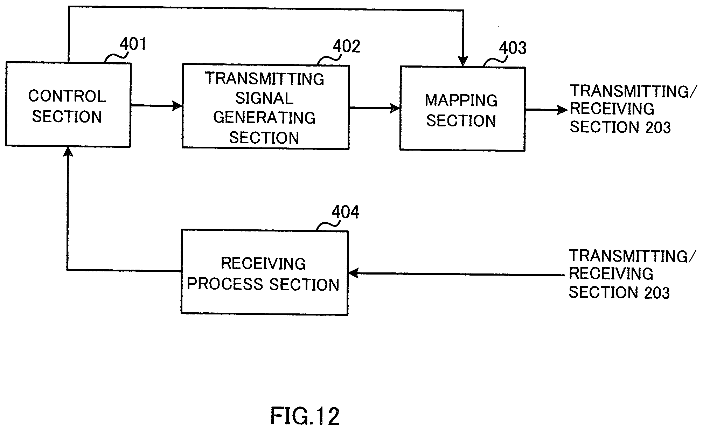

FIG. 12 is a diagram to show a principle functional structure of the baseband signal processing section 204 provided in the user terminal 20. Note that, although FIG. 12 primarily shows functional blocks that pertain to characteristic parts of the present embodiment, the user terminal 20 has other functional blocks that are necessary for radio communication as well.

As shown in FIG. 12, the user terminal 20 is comprised at least of a control section 401, a transmission signal generating section 402, a mapping section 403 and a receiving process section 404.

The control section 401 acquires the downlink control signals (signals transmitted in the PDCCH/EPDCCH) and downlink data signals (signals transmitted in the PDSCH and the PUSCH) transmitted from the radio base station 10, from the receiving process section 404. The control section 401 controls the generation of UL signals based on the results of deciding whether or not retransmission control is necessary for the downlink control signals, downlink data signals and so on. To be more specific, the control section 401 controls the transmission signal generating section 402 and the mapping section 403. Nor that the control section 401 can be constituted with a controller, a control circuit or a control device that is used in the technical field to which the present invention pertains.

The transmission signal generating section 402 generates UL signals based on commands from the control section 401 and outputs these signals to the mapping section 403. For example, the transmission signal generating section 402 generates uplink control signals such as delivery acknowledgement signals (HARQ-ACKs), channel state information (CSI) and so on, based on commands from the control section 401.

Also, the transmission signal generating section 402 generates uplink data signals based on commands from the control section 401. For example, when a UL grant is contained in a downlink control signal reported from the radio base station 10, the control section 401 commands the transmission signal generating section 402 to generate an uplink data signal. Also, the transmission signal generating section 402 generates the SRS based on commands from the control section 401. Note that transmission signal generating section 402 can be constituted with a signal generator or a signal generating circuit that is used in the technical field to which the present invention pertains.

Based on commands from the control section 401, the mapping section 403 maps the uplink signals generated in the transmission signal generating section 402 to radio resources (for example, the PUSCH), and outputs these to the transmitting/receiving sections 203. Note that the mapping section 403 can be constituted with a mapping circuit or a mapper that is used in the technical field to which the present invention pertains.

The receiving process section 404 performs receiving processes (for example, demapping, demodulation, decoding and so on) of DL signals transmitted from the radio base station 10. Also, the receiving process section 404 may measure the received power (RSRP) and the channel states by using the received signals. Note that the process results and the measurement results may be output to the control section 401.

Also, based on information about the subframes used for DL-PUSCH transmission/reception and so on, the receiving process section 404 can perform the receiving processes of DL-PUSCHs in UL resources (for example, UL subframes). Note that the receiving process section 404 can be constituted with a signal processor or a signal processing circuit that is used in the technical field to which the present invention pertains.

Note that the block diagrams that have been used to describe the above embodiments show blocks in function units. These functional blocks (components) may be implemented in arbitrary combinations of hardware and software. Also, means for implementing each functional block is not particularly limited. That is, each functional block may be implemented with one physically-integrated device, or may be implemented by connecting two physically separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and the user terminals 20 may be implemented with a computer device that includes a processor (CPU), a communication interface for connecting with networks, a memory and a computer-readable storage medium that holds programs.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and the user terminals 20 may include input devices such as input keys and output devices such as displays.

The functional structures of radio base stations 10 and user terminals 20 may be implemented with the above-described hardware, may be implemented with software modules that are executed on the processor, or may be implemented with combinations of both. The processor controls the whole of the user terminals by allowing the operating system to work. Also, the processor reads programs, software modules and data from the storage medium into the memory, and executes various types of processes. Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2014-156895, filed on July 31, 2014, including the specification, drawings and abstract, is incorporated herein by reference in its entirety.

## Claims

1. A radio base station comprising:
a receiving section that receives uplink data that is transmitted from a user terminal by using an uplink shared channel;
a transmission section that transmits downlink control information and downlink data to the user terminal; and
a control section that controls scheduling for the user terminal,
wherein the control section controls transmission of the downlink data using the uplink shared channel.

2. The radio base station according to claim 1, wherein the transmission section transmits information to configure, in the user terminal, reception of the downlink data using the uplink shared channel.

3. The radio base station according to claim 1, wherein, by using a downlink control channel, the control section indicates the user terminal to receive the downlink data by using the uplink shared channel.

4. The radio base station according to claim 1, wherein the control section controls the downlink data to be transmitted by using the uplink shared channel in a subframe in which uplink data transmission is not indicated by a UL grant.

5. The radio base station according to claim 1, wherein the control section controls the downlink data to be transmitted by using the uplink shared channel in a same subframe as a subframe which indicates the user terminal to receive the downlink data by using the uplink shared channel, or in a subframe that comes a predetermined period later.

6. The radio base station according to claim 1, wherein, by using a predetermined region of UL resources, the control section indicates the user terminal to receive the downlink data by using the uplink shared channel.

7. The radio base station according to claim 1, wherein the transmission section reports, to the user terminal, information about a subframe in which downlink data transmission is carried out by using the uplink shared channel.

8. The radio base station according to claim 7, wherein the control section configures a grant to indicate uplink data transmission using the uplink shared channel and a grant to indicate downlink data reception using the uplink shared channel in common.

9. A user terminal comprising:
a transmission section that transmits uplink data by using an uplink shared channel; and
a receiving section that receives downlink control information and downlink data that are transmitted from a radio base station,
wherein the receiving section receives the downlink data that is transmitted by using the uplink shared channel, based on information that is transmitted from the radio base station to configure reception of the downlink data using the uplink shared channel.

10. A radio communication method for a radio base station that connects with a user terminal, the radio communication method comprising the steps of:
receiving uplink data that is transmitted from the user terminal by using an uplink shared channel;
transmitting downlink control information and downlink data to the user terminal;
configuring reception of the downlink data using the uplink shared channel in the user terminal; and
transmitting the downlink data by using the uplink shared channel in a predetermined subframe.
